# EUROPÄISCHE PATENTANMELDUNG

(11) **EP 1 371 432 A2**
(43) Veröffentlichungstag der Anmeldung: **17.12.2003**
(21) Anmeldenummer: 03012349.1
(22) Anmeldetag: 30.05.2003
(51) Int. Cl.: B22D 31/00, B23D 79/06, B29C 49/72

(54) **Entgratpresse**

(30) Priorität: 10.06.2002 DE 10225528
(71) Anmelder: G + K Umformtechnik GmbH, 63843 Niedernberg (DE)
(72) Erfinder: Gröschel, Normen, 63843 Niedernberg (DE)
(74) Vertreter: Pöhner, Wilfried Anton, Dr.

(57) **Zusammenfassung**

Beschrieben wird eine Entgratpresse mit einem Pressengestell (1), einem in vertikaler Richtung bewegbaren Stempel (2), der mit einem Oberwerkzeug (3) ausgerüstet ist, und einem unterhalb des Stempels angeordneten, am Pressengestell festgelegten Pressentisch (4) mit Unterwerkzeug (5), welches das Werkstück aufnimmt.

Erfindungsgemäß ist vorgesehen, die Presse mit Linearführungen (7) auszustatten, welche gegen die Horizontale geneigt angeordnet sind, an denen der Pressentisch verschiebbar festgelegt ist und auf denen er, vorzugsweise parallel zu sich selbst, aus der Presse herausfahrbar ist. Dabei ist das jeweils in Ausfahrrichtung weisende Ende (8") der Linearführungen höher angeordnet als das jeweils in Einfahrrichtung weisende Ende (8').

## Beschreibung

Die Erfindung betrifft eine Entgratpresse mit einem Pressengestell, einem in vertikaler Richtung bewegbaren Stempel, der mit einem Oberwerkzeug ausgerüstet ist, und einem unterhalb des Stempels angeordneten, am Pressengestell festgelegten Pressentisch mit Unterwerkzeug, welches das Werkstück aufnimmt.

Bei den urformenden und umformenden Fertigungsverfahren oder auch der Kunststoffverarbeitung entsteht meist ein scharfer, rissiger, über die benachbarten Flächen des Werkstücks überstehender Grat. Er birgt einerseits hohe Verletzungsgefahr und erschwert andererseits die Weiterverarbeitung des Werkstücks. In aller Regel muß der Grat daher vor einer weiteren Bearbeitung des Werkstücks entfernt werden.

Im Stand der Technik sind mehrere Verfahren und Vorrichtungen bekannt, die zum Entgraten derartiger Werkstücke eingesetzt werden.

Die einfachsten Vorrichtungen dieser Art bestehen aus manuell zu bedienenden Werkzeugen, wie beispielsweise Feilen, Dreikantschabern oder Abziehsteinen. Daneben sind auch motorbetriebene Werkzeuge bekannt, die zum Entgraten von Werkstücken einsetzbar sind, wie beispielsweise Schwingschleifer, Winkelschleifer, Bandschleifmaschinen oder motorbetriebene Schleifsteine. Kennzeichnend für eine Entgratung mit diesen Werkzeugen ist, daß der Grat vom Werkstück abgetrennt wird. Als Nachteil dieses Verfahren und der hierfür eingesetzten Werkzeuge ist anzuführen, daß sie nur einen sehr geringen Durchsatz ermöglichen und daher für die Entgratung von Serienteilen nicht in Frage kommen.

Für eine Entgratung großer Stückzahlen von Werkstücken in Gießereien, Schmiedebetrieben und Kunststoffverarbeitender Industrie werden heute praktisch ausnahmslos Entgratpressen eingesetzt. Bei diesen Maschinen wird die Entgratung nicht durch Entfernen des Grates erreicht, sondern dadurch, daß der Grat wieder an das Werksstück angepreßt wird. Im Stand der Technik sind mehrere Entgratpressen bekannt, die sich unter anderem in der Ausbildung des Pressentisches unterscheiden. Der wesentliche Unterschied besteht hierbei darin, daß der Tisch entweder ortsfest oder horizontal ausfahrbar ausgebildet ist. Dabei bietet letztere Ausführung den Vorteil einer einfachen Beschickung der Presse mit dem zu bearbeitenden Werkstück und einer einfachen Entnahme des entgrateten Werkstücks. Um den Entnahmevorgang weitgehend zu vereinfachen, ist der Pressentisch bei jener Ausführung verschwenkbar ausgeführt. Dadurch läßt sich das Werkstück und/oder der Gratabfall nach dessen Bearbeitung einfach aus dem Unterwerkzeug herauskippen, um von einem unterhalb des Tisches angeordneten Förderband weg transportiert zu werden.

Von Vorteil für die Bedienung der Entgratpresse ist es, wenn der Pressentisch eine normale Arbeitshöhe aufweist. In diesem Fall kann die Beschickung der Presse und die Entnahme der bearbeiteten Werkstücke auch manuell problemlos erfolgen, was dann von Bedeutung ist, wenn die automatische Anund Abdienung der Werkstücke aufgrund einer Störung ausgefallen ist. Bei der an sich bevorzugten Ausführung von Entgratpressen mit horizontal ausfahrbarem Pressentisch führt eine Anordnung des Tisches in normaler Arbeitshöhe jedoch zu einem Problem bei der Installation der Förderstrecke. Der Abstand zwischen Oberkante Förderband und Boden liegt üblicherweise in der Größenordnung von etwa 40 Zentimetern. Eine normale Arbeitshöhe von ca. 80 Zentimetern führt dann dazu, daß die verbleibenden Höhendifferenz von ca. 40 Zentimetern nicht mehr genügend Raum zum Verschwenken des Pressentisches bietet.

Bei der genannten Entgratpresse nach dem Stand der Technik löst man dieses Problem dadurch, daß die Presse auf einen Sockel gestellt und/oder das Förderband im Boden abgesenkt wird. Beide Lösungen sind jedoch als nachteilig anzusehen, da deren Umsetzung aufwendige bauliche Maßnahmen erfordern. Bei der zweiten Lösung macht das Absenken des Förderbandes es erforderlich, daß der Boden in diesem Bereich ebenfalls abgesenkt ist. Bei der ersten Lösung hingegen muß der Boden im Bereich der Presse einen erhöhten Sockel aufweisen. Da Pressen der genannten Art in der Regel jedoch ein Gewicht von etlichen Tonnen besitzen, muß der Sockel für hohe Tragkräfte ausgelegt und dementsprechend stabil ausgeführt sein. Darüber hinaus ist auch für die Bedienperson ein Arbeitspodest erforderlich, das die normale Arbeitshöhe zum angehobenen Pressentisch herstellt. Entgratpressen nach dem Stand der Technik verursachen bei deren Installation in nachteiliger Weise daher hohe Kosten.

Hiervon ausgehend hat sich die Erfindung die Aufgabe gestellt, einen Entgratpresse anzugeben, welche die genannten Nachteile vermeidet, eine kostengünstige Installation ermöglicht und sowohl eine einfache Beschickung als auch eine einfache Entnahme des Werkstücks sicherstellt.

Erfindungsgemäß wird diese Aufgabe dadurch gelöst, daß
- Linearführungen vorgesehen sind,
   - die am Pressengestell, gegen die Horizontale geneigt, angeordnet sind,
   - an denen der Pressentisch verschiebbar festgelegt ist
   - und auf denen er
      - vorzugsweise parallel zu sich selbst,
   aus der Presse herausfahrbar ist,
- wobei
   - das jeweils in Ausfahrrichtung weisende Ende der Linearführungen höher angeordnet ist
   - als das jeweils in Einfahrrichtung weisende Ende.

Die Entgratpresse gemäß vorliegender Erfindung weist, wie die Pressen nach dem Stand der Technik, einen herausfahrbaren Pressentisch auf. In Abweichung zu den bekannten Pressen ist der Tisch jedoch nicht in horizontaler Richtung, sondern in einer gegen die Horizontale geneigten, nach außen hin ansteigenden Richtung aus der Presse herausfahrbar. ist. Zu diesem Zweck sind am Pressengestell Linearführungen in einer gegen die Horizontale geneigten Richtung befestigt, auf denen der Pressentisch verschiebbar festgelegt ist. Die Linearführungen lassen ein problemloses Aus und Einfahren des Pressentisches zu, wobei der Pressentisch während des Verschiebens vorzugsweise zu sich selbst parallel verbleibt.

Die vorgeschlagene Anordnung der Linearführungen führt dazu, daß die Höhe des Pressentisches über dem Boden beim Herausfahren des Tisches kontinuierlich zunimmt. Die Endposition des Tisches im ausgefahrenen Zustand liegt dementsprechend um einen durch die Neigung und die Länge der Linearführungen vorgebbaren Wert höher als die Ausgangsposition im eingefahrenen Zustand. Einem Kerngedanken der Erfindung entsprechend läßt sich die Neigung und die Länge der Linearverschiebungen so vorgeben, daß der Tisch einerseits im eingefahrenen Zustand eine normale Arbeitshöhe aufweist, und anderseits im ausgefahrenen Zustand eine Höhe einnimmt, welche ausreichend Raum zum Verschwenken des Tisches bietet. Bei vorgeschlagener Ausbildung läßt sich die Förderstrecke zum Abtransport des Entgratabfalls daher im Bereich unterhalb des ausgefahrenen Tisches anordnen, ohne daß die Förderstrecke im Boden abgesenkt oder die Presse auf einem erhöhten Sockel aufgestellt werden muß.

Ein wesentlicher Vorteil der Entgratpresse gemäß vorliegender Erfindung ist somit in einer Einsparung erheblicher Kosten bei der Installation der Presse und der Förderstrecke zu sehen. Da die Verschiebung des Pressentisches bei vorgeschlagener Ausbildung der Entgratpresse vergleichsweise gering bleibt, sind auch keine zusätzlichen konstruktiven Maßnahmen zur Versorgung des auf dem Pressentisch montierten Unterwerkzeuges erforderlich. Darüber hinaus stellen die vorgeschlagenen konstruktiven Maßnahmen in vorteilhafter weise sowohl eine einfache Beschickung als auch eine einfache Entnahme des Werkstücks sicher.

Entgratpressen der genannten Art sind in aller Regel mit einem hydraulische Antrieb versehen. Bei Pressen dieser Ausbildung wird daher vorgeschlagen, auch die Verschiebung des Pressentisches auf den Linearführungen mit hydraulischen Mitteln durchzuführen. Insbesondere bei großen Pressen ist auf diese Weise ein einfaches Aus- und Einfahren des Pressentisches sichergestellt.

Bei der technischen Umsetzung des Führungssystems des Pressentisches ist gemäß einem Merkmal der Erfindung vorgesehen, daß die Linearführungen jeweils eine Führungsschiene und mindestens einen auf der Schiene laufenden Führungsschlitten umfassen. Dabei sind die Führungsschienen starr am Pressengestell befestigt, während der Pressentisch verschwenkbar an den Führungsschlitten festgelegt ist. Diese Ausbildung erlaubt in vorteilhafter Weise sowohl ein Verschieben des Pressentisches als auch dessen Verschwenkung. Bei einer Presse, die als Rahmenpresse aufgebaut ist, erhält man eine besondere Stabilisierung des Pressegestells und folglich auch der hieran befestigten Führungsschienen. Wie bereits erwähnt, behält der Pressentisch während der Verschiebung von dessen Ausgangsposition in der Presse bis zu dessen Endposition vor der Presse seine Ausrichtung bei und wird erst nach Erreichen der endgültigen Position verschwenkt. Dann wird das entgratete Werkstück entnommen und der Gratabfall auf die unterhalb des Pressentisches angeordnete Förderbahn abgekippt und von dieser weg transportiert.

Bei einer bevorzugten Ausführungsform der Entgratpresse gemäß vorliegender Erfindung erfolgt die Festlegung des Pressentisches an den Führungsschlitten jeweils mittels eines Armes. Dabei ist dessen eines Ende jeweils um eine erste, zur Ein- und Ausfahrrichtung senkrechte Achse verschwenkbar an den Führungsschlitten angelenkt, während dessen anderes Ende jeweils um eine zweite, zur Ein- und Ausfahrrichtung senkrechte Achse verschwenkbar am Pressentisch festgelegt ist.

Diese Ausgestaltung von Führungsschlitten und Pressentisch ermöglicht einen besonders vorteilhaften, aus zwei Phasen bestehenden Ablauf beim Verschwenken des Pressentisches in dessen ausgefahrener Position. In der ersten Phase erfolgt die Verschwenkung um den ersten Anlenkpunkt der Arme am Führungsschlitten, wobei Tisch und Arme sich synchron zueinander um die erste der genannten Achsen bewegen. Hierbei wird der Tisch, durch die Länge der Arme bedingt, über den ersten Anlenkpunkt hinaus angehoben und dadurch seine geometrische Höhe zusätzlich zu der in der Endposition vorliegenden vergrößert.

Wenn der Tisch eine Verschwenkung von ca. 90 Grad erfahren hat, beträgt dieser zusätzliche Gewinn an geometrischer Höhe über dem Boden etwa der Länge der Arme. Die vorgeschlagene konstruktive Maßführt daher über die Anhebung des Tisches aufgrund der geneigt angeordneten Führungsschienen hinaus zu einer weiteren Anhebung des Tisches. Die vorteilhafte Folge hiervon ist, daß bereits bei vergleichsweise geringen Neigungen der Führungsschienen ausreichend Platz für ein Verschwenken des Pressentisches in dessen Endstellung erzielt wird.

Nach einer Verschwenkung des Pressentisches um etwa 90 Grad erfolgt die weitere Verschwenkung gemäß der zweiten Ablaufphase. Hierbei wird der Tisch um den Anlenkpunkt der Arme am Pressentisch verschwenkt, während die Arme ihre erreichte Position beibehalten. Der Tisch erreicht schließlich eine Verschwenkposition von etwa 180 Grad gegenüber seiner Ausgangsorientierung, in welcher das entgratete Werkstück ausgeworfen und somit dem Förderband übergeben wird.

Weitere Einzelheiten, Merkmale und Vorteile der Erfindung lassen sich dem nachfolgenden Teil der Beschreibung entnehmen. In diesem Teil wird ein Ausführungsbeispiel der erfindungsgemäßen Entgratpresse anhand einer Zeichnung näher erläutert. Es zeigen:
- Figur 1:: eine Seitenansicht der Entgratpresse in schematischer Darstellung
- Figur 2a - 2d:: den Pressentisch in verschiedenen Verschwenkpositionen

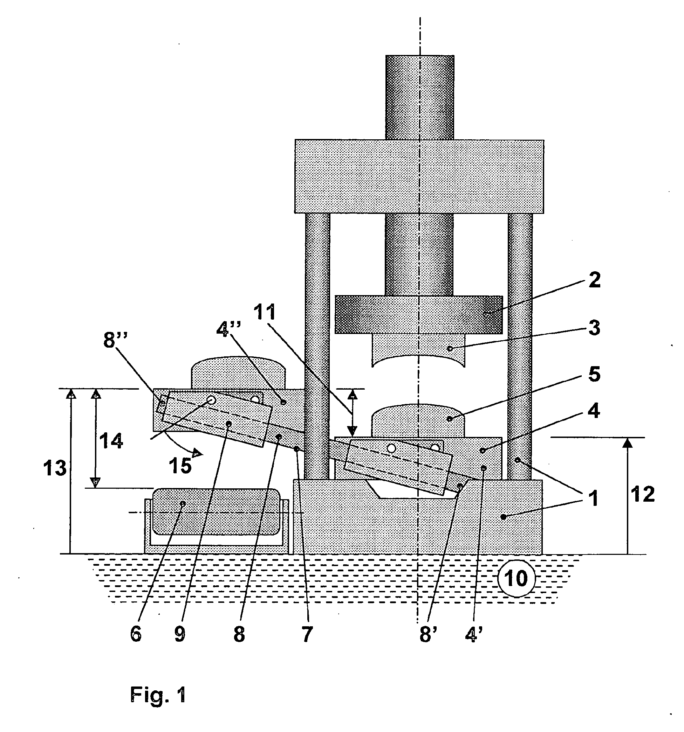

In Figur 1 sind die wesentlichen Komponenten der Entgratpresse gemäß vorliegender Erfindung zu erkennen. Sie umfassen ein Pressengestell 1, einen in vertikaler Richtung bewegbaren Stempel 2, der mit einem Oberwerkzeug 3 ausgerüstet ist, und einen unterhalb des Stempels 2 angeordneten, ausfahrbaren Pressentisch 4, der das Unterwerkzeug 5 zur Aufnahme eines nicht dargestellten Werkstückes trägt. Der Pressentisch 4 ist in zwei Positionen dargestellt, die dem eingefahrenen Zustand 4' und dem ausgefahrenen Zustand 4" entsprechen. Ebenfalls zur Ausstattung der Entgratpresse gehört ein Förderband 6, das in dem unterhalb des ausgefahrenen Pressentisches 4" liegenden Bereich angeordnet ist und zur Aufnahme des Gratabfalls nach dessen Entgratung und Entnahme des Werkstücks in der Presse dient.

Die Führung des Tisches beim Ein- und Ausfahren erfolgt über zwei Linearführungen 7, die in einer gegen die Horizontale geneigten Richtung am Pressengestell 1 befestigt sind. Bei vorliegender Ausführungsform weisen die Linearführungen 7 jeweils eine Führungsschiene 8 und einen auf der Schiene laufenden Führungsschlitten 9 auf. Dabei sind die Führungsschienen 8 starr am Pressengestell befestigt, während der Pressentisch 4 verschwenkbar an den Führungsschlitten 9 festgelegt ist.

Wie man der Figur 1 entnehmen kann, ist das jeweils in Ausfahrrichtung weisende Ende 8" der Führungsschienen 8 höher angeordnet als das jeweils in Einfahrrichtung weisende Ende 8'. Diese Anordnung führt dazu, daß die Höhe des Pressentisches 4 über dem Boden 10 beim Herausfahren des Tisches kontinuierlich zunimmt. Die Endposition 4" des Tisches im ausgefahrenen Zustand liegt dementsprechend um den Abstand 11 höher als die Ausgangsposition 4' im eingefahrenen Zustand.

Die angewandten konstruktiven Maßnahmen ermöglichen es einerseits, den Tisch 4 im eingefahrenen Zustand 4' in einer normalen Arbeitshöhe 12 anzuordnen. Andererseits nimmt der Tisch im ausgefahrenen Zustand 4" eine Höhe 13 über dem Boden 10 ein, welche ausreichend Raum 14 über dem Förderband 6 zum Verschwenken des Tisches 4 beim Auswurf des bearbeiteten Werkstücks bietet, wobei die Verschwenkbewegung in vorliegender Figur durch den Pfeil 15 angedeutet ist. Die Förderstrecke zum Abtransport der bearbeiten Werkstücke kann bei der Entgratpresse gemäß vorliegender Erfindung daher auf dem Boden 10 plaziert werden. Bei der Installation der Presse ist weder eine Tieferlegung der Förderstrecke unter die Bodenoberkannte noch eine Aufstellung der Presse auf einem Sockel erforderlich.

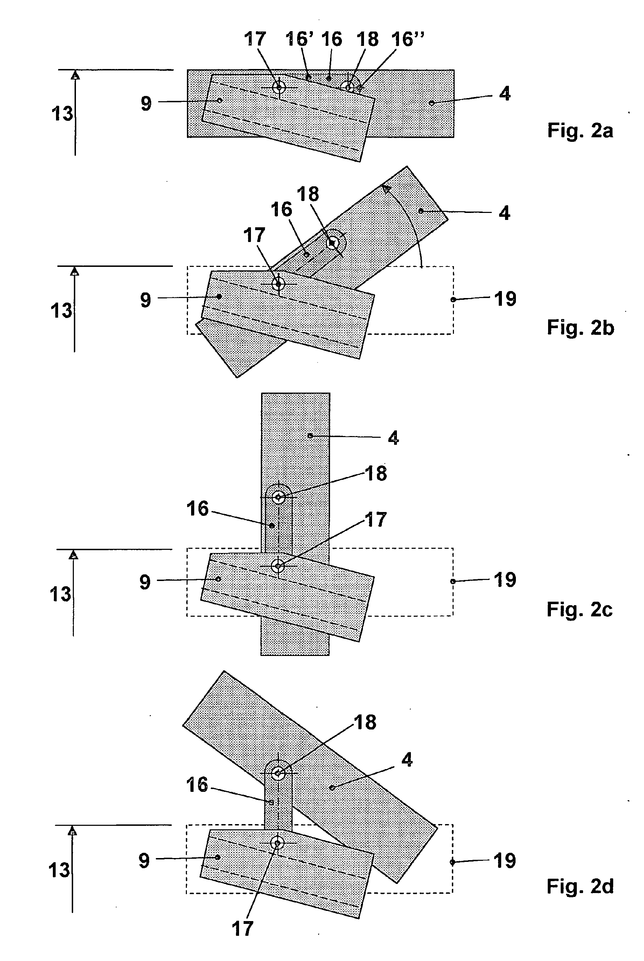

Der Ablauf bei der Verschwenkung des Pressentisches ist den Figuren 2a - 2d zu entnehmen, in denen einzelne Verschwenkpositionen wiedergegeben sind. Die Figuren zeigen den Führungsschlitten 9 und den daran festgelegten Tisch 4, wobei bei vorliegender Ausführungsform die Festlegung jeweils mittels eines Armes 16 erfolgt. Dabei ist das eine Ende 16' des Armes 16 um eine erste, zur Ein- und Ausfahrrichtung senkrechte Achse 17 verschwenkbar am Führungsschlitten 9 angelenkt, während dessen anderes Ende 16" jeweils um eine zweite, zur Ein- und Ausfahrrichtung senkrechte Achse 18 verschwenkbar am Pressentisch 4 festgelegt ist. Diese Ausgestaltung ermöglicht ein Verschwenken des Pressentisches 4 in zwei Stufen, wobei Figur 2a - 2c die erste Stufe, Figur 2d die zweite Stufe veranschaulichen.

Im Verschwenkungsbereich von 0 bis etwa 90 Grad erfolgt die Verschwenkung gemäß Figur 2a - 2c um die Achse 17, wobei der Tisch 4 und die Arme 16 sich synchron zueinander bewegen. Bei dieser Bewegung wird der Tisch 4 über den ersten Anlenkpunkt 17 hinaus angehoben, wodurch sich seine Höhe über dem Boden 10 über die Höhe 13 hinaus vergrößert. In der Verschwenkposition gemäß Figur 2c ist der Tisch gegenüber seiner Ausgangsposition 19 um 90 Grad verschwenkt worden. Der zusätzliche Gewinn an geometrischer Höhe über dem Boden 10 entspricht hierbei der Länge der Arme 16.

Im Verschwenkungsbereich von 90 - 180 Grad erfolgt die Verschwenkung um die Achse 18, wobei die Arme 16 die in Figur 2c wiedergegebene Position beibehalten. Wenn der Tisch eine Verschwenkposition von etwa 180 Grad gegenüber seiner Ausgangsposition 19 erreicht hat, erfolgt der Auswurf des entgrateten Werkstück und dessen Übergabe an die Förderstrecke 6.

## Patentansprüche

1. Entgratpresse ausgestattet mit
- einem Pressengestell (1),
- einem in vertikaler Richtung bewegbaren Stempel (2), der mit einem Oberwerkzeug (3) ausgerüstet ist,
- und einem unterhalb des Stempels (2) angeordneten, am Pressengestell (1) festgelegten Pressentisch (4) mit Unterwerkzeug (5),
- welches das Werkstück aufnimmt,
**dadurch gekennzeichnet, daß**
- Linearführungen (7) vorgesehen sind,
- die am Pressengestell (1), gegen die Horizontale geneigt, angeordnet sind,
- an denen der Pressentisch (4) verschiebbar festgelegt ist
- und auf denen er
- vorzugsweise parallel zu sich selbst,
aus der Presse herausfahrbar ist,
- wobei
- das jeweils in Ausfahrrichtung weisende Ende (8") der Linearführungen (7) höher angeordnet ist
- als das jeweils in Einfahrrichtung weisende Ende (8').

2. Entgratpresse nach Anspruch 1, **dadurch gekennzeichnet, daß**
- in dem unterhalb des ausgefahrenen Pressentisches (4") liegenden Bereich eine Förderstrecke (6) zur Aufnahme der Entgratabfällle angeordnet ist.

3. Entgratpresse nach Anspruch 1 oder 2, **dadurch gekennzeichnet, daß**
- das Aus- und Einfahren des Pressentisches (4) mit hydraulischen Mitteln erfolgt.

4. Entgratpresse nach einem der Ansprüche 1 - 3, **dadurch gekennzeichnet, daß**
- die Linearführungen (7) jeweils eine Führungsschiene (8) und mindestens einen auf der Schiene laufenden Führungsschlitten (9) umfassen,
- wobei
- die Führungsschienen (8) jeweils starr am Pressengestell (1) befestigt sind,
- während der Pressentisch (4) verschwenkbar an den Führungsschlitten (9) festgelegt ist.

5. Entgratpresse nach einem der Ansprüche 1 - 4, **dadurch gekennzeichnet, daß**
- die Festlegung des Pressentisches (4) an den Führungsschlitten (9) jeweils mittels eines Armes (16) erfolgt,
wobei
- dessen eines Ende (16') jeweils um eine erste, zur Ein- und Ausfahrrichtung senkrechte Achse (17) verschwenkbar am Führungsschlitten (9) angelenkt ist
- und dessen anderes Ende (16") jeweils um eine zweite, zur Einund Ausfahrrichtung senkrechte Achse (18) verschwenkbar am Pressentisch (4) festgelegt ist.
